# FASCICULE DE BREVET EUROPEEN

(11) **EP 1 637 303 B1**
(45) Date de publication et mention de la délivrance du brevet: **26.12.2007**
(21) Numéro de dépôt: 04292236.9
(22) Date de dépôt: 17.09.2004
(51) Int. Cl.: B28D 1/04, B23D 47/02, B23D 45/02

(54) **Scie de table, en particulier pour la coupe de carrelages**
Tischsäge, insbesondere zum Schneiden von Fliesen
Table saw, particularly for cutting tiles

(43) Date de publication de la demande: 22.03.2006
(73) Titulaire: DIAMANT BOART Société Anonyme, 1190 Bruxelles (BE)
(72) Inventeur: Gomez, Javier, 4934 Madiswil (CH)
(74) Mandataire: Maillet, Alain

(56) Documents cités:
- DE-U- 7 441 764
- FR-A1- 2 250 598
- FR-A1- 2 624 049
- FR-A1- 2 745 737
- US-A- 4 541 404
- DATABASE WPI Section PQ, Week 198632 Derwent Publications Ltd., London, GB; Class P64, AN 1986-210494 XP002314764 -& SU 1 201 160 A (GLAVTONNELMETROSTRO) 30 décembre 1985 (1985-12-30)

## Description

La présente invention concerne une scie sur table selon le préambule de la revendication 1. Elle trouve application dans le domaine du découpage des plaques par exemple en carrelage, en céramique, en verre, en pierre naturelle ou artificielle ou autre. Une telle scie de table est connue du document FR 2250598 A1.

Le brevet EP-B-0.032.383 décrit une scie de table comprenant une table support montée sur un châssis et composée de deux parties dont la première porte un châssis de guidage portant lui-même un disque de sciage, par exemple sous forme d'une scie circulaire, et un moteur d'entraînement. Les deux parties de la table support sont réunies entre elles de façon articulée le long d'un premier axe qui s'étend parallèlement au châssis de guidage et sensiblement à la verticale du disque de sciage.

La première partie de la table support portant le châssis de guidage est montée libre à la rotation sur le châssis, autour d'un deuxième axe parallèle au châssis de guidage et situé derrière le premier axe. Cette première partie de la table peut donc pivoter vers l'arrière en soulevant sa partie avant.

La deuxième partie de la table support est liée au niveau de sa partie arrière au premier axe tandis que sa partie avant est libre de coulisser horizontalement.

Lors de la réalisation d'onglets, le châssis de guidage bascule vers l'arrière, entraînant le relèvement, d'une part, de l'avant de la première partie de la table support et, d'autre part, du premier axe, ce qui entraîne alors le soulèvement de l'arrière de la deuxième partie de la table support dont la partie avant coulisse pour compenser son soulèvement.

Comme le châssis de guidage et la deuxième partie de la table support basculent automatiquement l'un avec l'autre, il suffit pour réaliser un onglet, de basculer le châssis de guidage d'un angle correspondant à la moitié de l'angle de l'onglet.

Le basculement du châssis de guidage peut être rendu difficile du fait que la deuxième partie de la table support qui porte l'élément à scier, se soulève. En effet, lorsque l'élément à scier est lourd, le professionnel doit exercer un effort important sur le châssis de guidage pour le faire basculer, ou alors il doit déposer l'élément en dehors de la scie de table pour réaliser le basculement, puis redéposer l'élément à scier sur la scie de table, entraînant ainsi des manipulations supplémentaires.

La mise en place de deux axes de rotation différents oblige à un grand respect des tolérances d'ajustement, ce qui est souvent incompatible avec un assemblage rapide et une baisse des coûts de production.

Un objet de la présente invention est de proposer une scie de table qui ne présente pas les inconvénients de l'art antérieur.

A cet effet, est proposé une scie de table selon la revendication 1.

Des modes de réalisation supplémentaires sont avantageusement décrits par les revendications dépendantes 2 à 4.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une scie de table selon l'invention dans une position dite de "sciage horizontal";
la Fig. 2 représente une scie de table selon l'invention dans une position dite de "sciage angulaire";
la Fig. 3 représente une coupe selon la ligne III-III de la Fig. 1 d'une scie de table selon l'invention, sans la scie circulaire;
la Fig. 4 représente un détail de réalisation selon la flèche IV de la Fig. 3;
la Fig. 5 représente une coupe partielle selon la ligne V-V de la Fig. 3.

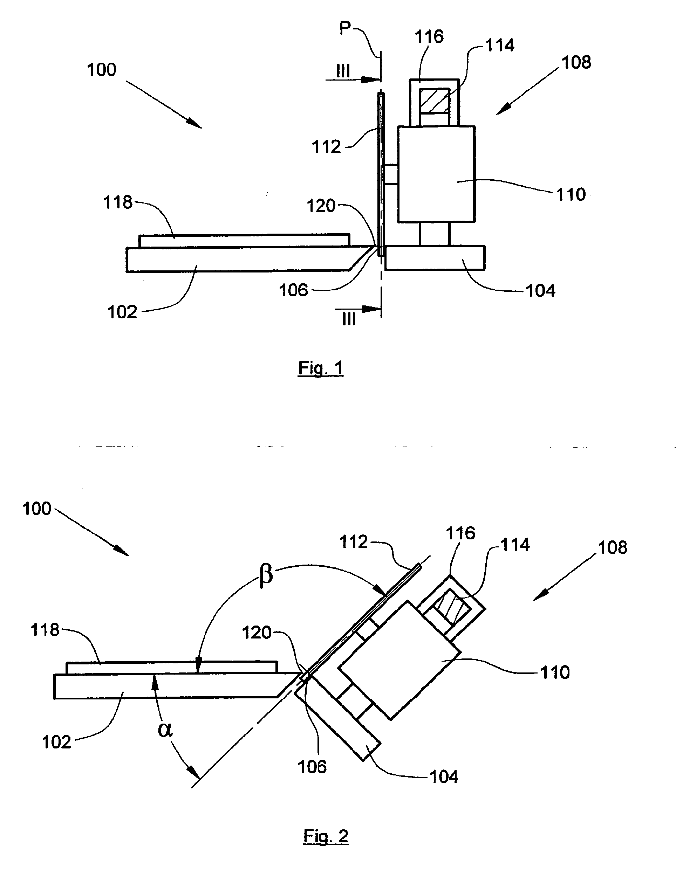

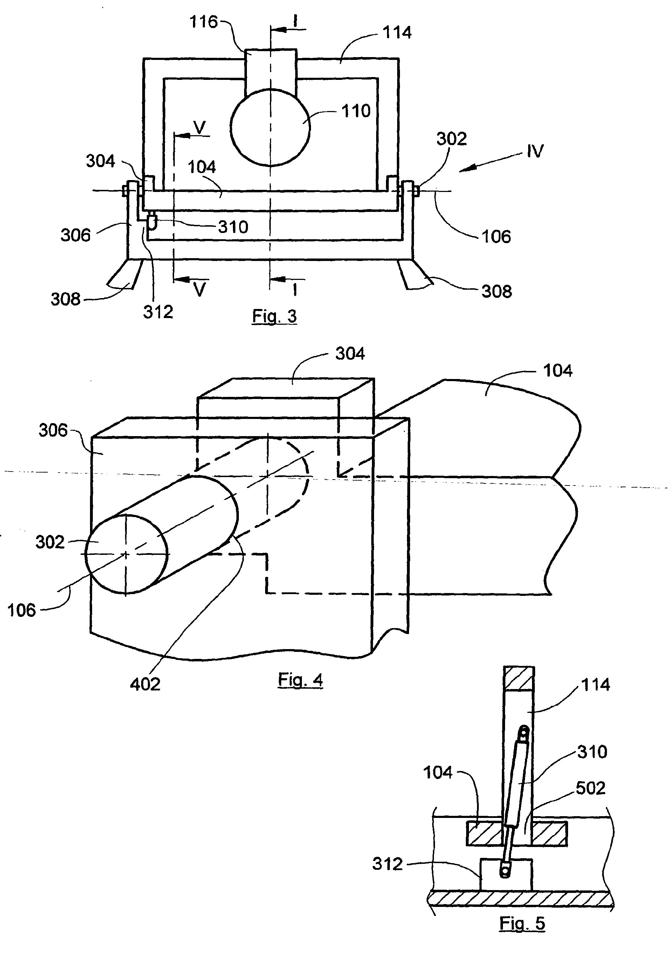

La Fig. 1 représente une scie de table 100 comprenant un châssis principal 306 (Fig. 3) sur lequel repose une table support constituée d'une première partie 102 qui sert de support à une pièce 118 à scier et d'une deuxième partie 104 qui est solidaire d'un châssis de guidage 114 en forme d'arche qui s'étend parallèlement à un axe 106. L'axe 106 est lui-même parallèle à la ligne de séparation entre les deux parties de la table support.

Le châssis de guidage 114 porte un ensemble de sciage 108 par l'intermédiaire d'un arceau 116 qui coulisse le long du châssis de guidage 114. L'ensemble de sciage 108 comprend une scie circulaire 112 et un moteur 110 solidaire de l'arceau 116.

Pour éviter d'avoir à soulever la pièce à scier 118 lors de la réalisation d'un onglet, la première partie 102 est fixe par rapport au châssis principal 306 et est de préférence horizontale.

Pour réaliser l'onglet, la deuxième partie 104 est mobile en rotation autour de l'axe 106 par rapport au châssis principal 306 entre une position dite de "sciage horizontal" et une position dite de "sciage angulaire". Le basculement simultané de la deuxième partie 104 et du châssis de guidage 114 évite que l'ensemble de sciage 108 et en particulier le moteur 110 vienne heurter la deuxième partie 104 de la table support lors du basculement, ce qui pourrait limiter l'angle de basculement.

Il existe donc un seul axe 106 de rotation ce qui facilite le respect des tolérances d'ajustement.

Pour permettre le sciage de la pièce à scier 118, la scie circulaire 112 pénètre dans un espace 120 réalisé entre les deux parties de la table support.

La Fig. 2 représente la scie de table 100 en position de sciage angulaire lorsque l'angle de l'onglet à réaliser vaut α, l'angle de vision β vaut alors α + 90°. La position angulaire dans laquelle se trouve la deuxième partie 104 de la table support permet une évacuation facile des copeaux et des résidus issus du sciage.

Pour permettre un arrêt en rotation de la deuxième partie 104 de la table support, un dispositif de fixation (non représenté) permet de bloquer la deuxième partie 104 par rapport au châssis principal 106. Ce dispositif de fixation peut être par exemple constitué d'une vis qui vient solidariser la deuxième partie 104 de la table support avec le châssis principal 306.

Pour que la position de la scie circulaire 112 par rapport à la pièce à scier 118 soit sensiblement identique en position de sciage horizontal ou angulaire et pour qu'il n'y ait pas de problèmes d'encombrement liés à la rotation, la position de l'axe de rotation 106 est importante.

A cet effet, l'ensemble de sciage 108 définit un plan de coupe P et l'axe de rotation 106 est sensiblement situé à l'intersection du plan de coupe P avec le plan de la première partie 102 de la table support. Le plan P ainsi défini est de préférence le plan médian de la scie circulaire 112. On dira que l'axe de rotation 106 est sensiblement confondu avec ladite intersection si l'axe de rotation 106 se situe au voisinage de l'espace 120, c'est à dire que la rotation de la deuxième partie 104 doit alors permettre le maintien de la scie circulaire 112 dans l'espace 120.

Un exemple de dispositif de rotation de la deuxième partie 104 par rapport au châssis principal 306 va maintenant être décrit en relation avec la Fig. 3 et la Fig. 4.

La Fig. 3 représente une coupe selon la ligne III-III de la Fig. 1 sans la scie circulaire 112. On retrouve le châssis principal 306 qui repose sur des pieds 308 et la deuxième partie 104 qui porte le châssis de guidage 114.

La deuxième partie 104 comprend des excroissances 304 situées de part et d'autre et qui sont chacune solidaires d'un arbre 302 sensiblement centré sur l'axe 106 et qui s'étend en direction du châssis principal 306 et viennent traverser les parois du châssis principal 306 à travers des perçages 402.

La rotation de la deuxième partie 104 est donc réalisée par la coopération entre les arbres 302 et les parois du châssis principal 306. Pour que l'axe de rotation 106 soit déporté vers l'intérieur de l'espace 120, les excroissances 304 s'étendent en direction dudit espace 120 et les arbres 302 sont disposés au-delà des flancs de la deuxième partie 104.

Les arbres 302 peuvent être monoblocs avec les excroissances 304 ou ils peuvent être constitués d'éléments rapportés du type tiges filetées qui traversent les parois du châssis principal 306 à travers les perçages 402 et viennent se visser dans les excroissances 304.

Le châssis de guidage 114 est lourd à manipuler du fait de la présence de l'ensemble de sciage 108, pour aider le professionnel lors du passage de la position de sciage horizontal à la position de sciage angulaire et inversement, un moyen de rappel 310 (Fig. 5) est fixé entre le châssis principal 306 et le châssis de guidage 114.

Le moyen de rappel 310 permet de retenir l'ensemble mobile (deuxième partie 104, ensemble de sciage 108 et châssis de guidage 114) lors du basculement vers la position de sciage angulaire, et il permet de repousser sur l'ensemble mobile lors du retour en position de sciage horizontal.

Par exemple, le moyen de rappel 310 peut être un vérin hydraulique qui se comprime lors du passage de la position de sciage horizontal à la position de sciage angulaire pour emmagasiner de l'énergie et se détend lors du passage de la position de sciage angulaire à la position de sciage horizontal pour libérer l'énergie ainsi stockée.

Dans l'exemple représenté en Fig. 3 et en Fig. 5 et pour des raisons d'encombrement, le vérin 310 est fixé à l'une de ses extrémités au châssis de guidage 114 et à l'autre extrémité à une cale 312 solidaire du châssis principal 306. Le passage à travers la deuxième partie 104 se fait à travers un orifice 502.

Bien entendu, la présente invention n'est pas limitée aux exemples et modes de réalisation décrits et représentés, mais elle est susceptible de nombreuses variantes accessibles à l'homme de l'art dans la limite des revendications.

Par exemple, le moyen de rappel 310 a été fixé entre le châssis principal 306 et le châssis de guidage 114, mais il peut l'être entre le châssis principal 306 et la deuxième partie 104 de la table support.

## Revendications

1. Scie de table (100) comprenant :
- un châssis principal (306),
- une table support reposant sur le châssis principal (306),
- un châssis de guidage (114) supportant un ensemble de sciage (108) définissant un plan de coupe (P), ledit ensemble de sciage étant monté coulissant sur le châssis de guidage (114).
ledit ensemble de sciage (108) étant mobile en rotation autour d'un axe de rotation (106) entre une position dite de "sciage horizontal" et une position dite de "sciage angulaire", ledit axe de rotation (106) étant sensiblement situé à l'intersection du plan de coupe (P) avec le plan de la table support,
**caractérisée en ce que** ladite table support comprend deux parties de part et d'autre de l'axe de rotation (106) dont la première partie (102) est fixe et la deuxième partie (104) est solidaire de l'ensemble de sciage (108) et mobile avec ce dernier, la première partie (102) supportant une pièce à couper (118) lorsque ledit ensemble de sciage (108) se trouve dans ladite position de "sciage horizontal" ou dans ladite position de "sciage angulaire".

2. Scie de table (100) selon la revendication 1, **caractérisée en ce que** la rotation de la deuxième partie (104) de la table support est réalisée par deux arbres (302) solidaires de ladite deuxième partie (104) qui sont centrés sur l'axe (106), qui sont disposés au-delà des flancs de ladite deuxième partie (104) et qui traversent les parois du châssis principal (306).

3. Scie de table (100) selon l'une des revendications 1 à 2, **caractérisée en ce qu**'elle comprend un moyen de rappel (310) fixé entre le châssis principal (306) et la deuxième partie (104) de la table support ou le châssis de guidage (114).

4. Scie de table (100) selon la revendication 3, **caractérisée en ce que** le moyen de rappel est un vérin hydraulique (310) qui se comprime lors du passage de la position de "sciage horizontal" à la position de "sciage angulaire" et se détend lors du passage de la position de "sciage angulaire" à la position de "sciage horizontal".

## Claims

1. Bench saw (100) comprising:
- a main frame (306),
- a support bench resting on the main frame (306),
- a guide frame (114) supporting a sawing assembly (108) defining a cutting plane (P), said sawing assembly being slidably mounted on the guide frame (114),
said sawing assembly (108) being rotatable about a rotation axis (106) between a position termed "horizontal sawing" and a position termed "angular sawing", said rotation axis (106) being located substantially at the intersection of the cutting plane (P) with the plane of the support bench,
**characterised in that** the support bench comprises two sections on either side of the rotation axis (106), the first section (102) being fixed and the second section (104) being fixedly connected to the sawing assembly (108) and movable with the latter, the first section (102) supporting a workpiece to be cut (118) when said sawing assembly (108) is in said "horizontal sawing" position or in said "angular sawing" position.

2. Bench saw (100) according to claim 1, **characterised in that** the rotation of the second section (104) of the support bench is carried out by two shafts (302) fixedly connected to said second section (104) which are centred on the axis (106), which are arranged beyond the flanks of said second section (104) and which pass through the walls of the main frame (306).

3. Bench saw (100) according to one of claims 1 and 2, **characterised in that** it comprises return means (310) fixed between the main frame (306) and the second section (104) of the support bench or the guide frame (114).

4. Bench saw (100) according to claim 3, **characterised in that** the return means comprise a hydraulic jack (310) which is compressed during the transition from the "horizontal sawing" position to the "angular sawing" position and expands during the transition from the "angular sawing" position to the "horizontal sawing" position.

## Patentansprüche

1. Tischsäge (100), umfassend:
- ein Hauptgestell (306),
- einen Tragtisch, der auf dem Hauptgestell (306) ruht,
- ein Führungschassis (114), das eine Sägeeinheit (108) trägt, die eine Schneidebene (P) definiert,
wobei die Sägeeinheit gleitend auf dem Führungschassis (114) installiert ist,
wobei die Sägeeinheit (108) in Drehung um eine Rotationsachse (106) zwischen einer so genannten "Horizontalsäge"- und einer so genannten "Winkelsäge"-Position beweglich ist, wobei die Rotationsachse (106) im Wesentlichen an der Schnittstelle der Schneidebene (P) und der Ebene des Tragtischs liegt,
**dadurch gekennzeichnet, dass** der Tragtisch auf jeder Seite der Rotationsachse (106) jeweils einen Teil aufweist, wobei der erste Teil (102) stationär und der zweite Teil (104) fest mit der Sägeeinheit (108) verbunden und mit dieser Letzteren beweglich ist, wobei der erste Teil (102) einen zu schneidenden Teil (118) trägt, wenn sich die Sägeeinheit (108) in der "Horizontalsägeposition" oder in der "Winkelsägeposition" befindet.

2. Tischsäge (100) nach Anspruch 1, **dadurch gekennzeichnet, dass** die Drehung des zweiten Teils (104) des Tragtischs von zwei Wellen (302) ausgeführt wird, die fest mit dem zweiten Teil (104) verbunden sind, die auf die Achse (106) zentriert sind, die über die Flanken des zweiten Teils (104) hinaus angeordnet sind und die Wände des Hauptgestells (306) durchqueren.

3. Tischsäge (100) nach einem der Ansprüche 1 bis 2, **dadurch gekennzeichnet, dass** sie Rückholmittel (310) aufweist, die zwischen dem Hauptgestell (306) und dem zweiten Teil (104) des Tragtischs oder dem Führungschassis (114) befestigt sind.

4. Tischsäge (100) nach Anspruch 3, **dadurch gekennzeichnet, dass** das Rückholmittel ein hydraulischer Zylinder (310) ist, der sich beim Übergehen von der "Horizontalsageposition" auf die "Winkelsägeposition" zusammenzieht und sich beim Übergehen von der "Winkelsägeposition" auf die "Horizontalsägeposition" streckt.
